Europäisches Patentamt

European Patent Office

Office européen des brevets

(19)

(11) **EP 1 659 488 A1**

(12) **EUROPEAN PATENT APPLICATION**

(43) Date of publication:
24.05.2006 Bulletin 2006/21

(51) Int Cl.:
*G06F 9/445* (2006.01)    *H04L 29/06* (2006.01)

(21) Application number: 04292714.5

(22) Date of filing: 17.11.2004

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(71) Applicant: **ALCATEL**
**75008 Paris (FR)**

(72) Inventors:
• **Paparella, Andrea**
**21052 Busto Arsizio (Varese) (IT)**

• **Donadio, Pasquale**
**80129 Napoli (IT)**
• **Riglietti, Roberto**
**20059 Vimercate (Milano) (IT)**

(74) Representative: **Menzietti, Domenico et al**
**Alcatel**
**Intellectual Property Department,**
**Lorenzstrasse, 10**
**70435 Stuttgart (DE)**

(54) **Method of providing software components to nodes in a telecommunication network**

(57)    A method of distributing a first software component to a number of nodes of a telecommunication network is described. According to the method: a first node is provided with said first software component; said first node provides to a second adjacent node information on the availability of said first software component at said first node; said second adjacent node, according to the information received from said first node, determines whether to download said first software component from said first node; a third node is provided, which is adjacent to said second node; said second node provides to said third node information on the availability of said first software component at said first node and/or at said second node; and said third node, according to the information received from said second node, determines whether to download said first software component from said second node or from said first node.

Figure 5b

EP 1 659 488 A1

## Description

The present invention relates to a method for distributing software components to nodes of a telecommunication network.

In a telecommunication network, all the nodes consist of network elements, performing all the routing and switching functions of the traffic travelling across the network. Each network element comprises hardware devices (such as, for example, switches, cross-connectors or add-drop multiplexers) and software components, allowing, for instance, to configure the hardware devices in order to properly route the traffic.

Sometimes it is necessary, for network maintenance and/or upgrade purposes, distribute one or more software components to the network elements, such as, for instance, a new release of a software component already installed in the nodes. In these cases, it is desirable that a network provider is able to perform such maintenance/upgrade services as quickly as possible, and interfering as less as possible with the ordinary operation of the network. Besides, as the software distribution is generally performed on dedicated channels, it is desirable that the bandwidth of these channels is as reduced as possible, so that the system capacity is available for transporting user data.

In the art, it is known to carry out the software distribution in a centralized way. In other words, the new software components are distributed from a single source node to the target nodes, according to a path which is established *a priori* from control means which are external to the network. The software is distributed through suitable transfer protocols. For instance, it is possible to use the File Transfer Protocol FTP; in this case, the source node is called "FTP server", while the target nodes are called "FTP clients".

In these known centralised software distribution methods, the control means can be, for instance, a Network Operation Center or NOC. The NOC is an equipment allowing the network provider to perform, among other network supervision/management functions, the software distribution functions. For instance, the NOC decides which target nodes are to be involved in a software distribution, and which software components must be distributed to these target nodes.

According to a first known method for software distribution in a telecommunication network, copies of the software image are transmitted to a gateway node, and the other nodes obtain the software image from the gateway node. Multiple copies of the software image are provided from a software source to the gateway node for retrieval by each requesting node. This technique requires multiple streams of the software image to be distributed at the nodes.

A disadvantage of such a method is that the maximum number of target nodes that can receive a new software component within a single software distribution operation (an then the overall software distribution time of the network) depends on the dedicated channel bandwidth. This happens because the dedicated channel must support a number of separated data streams which is equal to the number of target nodes. Therefore, for a given dedicated channel bandwidth, the overall software distribution time is strictly dependent on the number of target nodes.

WO 2004/059434 discloses a method similar to the above described method, except that, instead of generating a number of copies of a software component which is equal to the number of target nodes, the invention uses an on-the-fly distribution concept and an handshake protocol, thus avoiding multicast techniques. One node in designed as gateway node and the other nodes are designed as receiving nodes; some nodes may also serve as intermediate nodes distributing software to the downstream nodes. A software source sends an initialisation request to the gateway node, including a list of all the nodes that are to receive the download. Then, the gateway node executes a route tracing routine to determine possible download channels. Then, one route is selected, either by a user, or by the gateway node and/or the software source, based on a variety of network parameters. The intermediate nodes are programmed for forward a copy of the received download to the remote node that is next in the download tree. The software image is distributed from the software source to the gateway node and then along the download channels to the nodes. The gateway forwards a copy of the software to each node over each gateway node-node download channel. The gateway node and intermediate nodes do not need to temporarily store the software for distribution, since the duplication and distribution occur on-the-fly.

However, if the number of target nodes is particularly high, this method requires a long time, both for executing route tracing routine and for propagating the software component along all the route. Moreover, this method is particularly disadvantageous in cases wherein only few nodes require software distribution, and these nodes are located very far from the software source. In fact, according to WO 2004/059434, the software distribution always starts from the software source. However, if the software source is very far from the target nodes, the distribution will require the intervention of many intermediate nodes, thus subtracting them capacity to support user data traffic.

As the known solutions, above described, are not completely satisfactory, an object of the present invention is to provide a method of software distribution to the nodes of a telecommunication network which overcomes the aforesaid problems.

In particular, an object of the present invention is providing a method of software distribution to the nodes of a telecommunication network which allows to perform the software maintenance/upgrade operations into the network as quickly as possible, and with an impact which is as low as possible on the capacity of high priority traffic.

These and other objects are achieved, according to the present invention, by a method of software distribution to nodes of a telecommunication network according to claim 1, and a node of a telecommunication network according to claim 16. Further advantageous features of the present invention are set forth into the respective dependent claims. All the claims are deemed to be an integral part of the present description.

According to the present invention, a method of software distribution to the nodes of a telecommunication network is provided, wherein the NOC selects one or more gateway nodes, to which the NOC sends a copy of a software component to be distributed. Each node, according to the present invention, exchanges information with the adjacent nodes. This information allows each node to determine whether a software distribution of a new software component is ongoing across the network. Further, each node is able to determine whether it has to download the new software component and, in affirmative case, each node is able to determine the source node(s) from which the new software component can be downloaded.

Finally, according to the invention, after downloading the new software component, each node is able to act as a source node for the adjacent nodes.

Therefore, according to the invention, the software distribution management is not centralised but it is distributed among all the nodes of the network. The NOC indeed only selects the gateway nodes from which the software distribution starts, but it is not responsible for detecting all the target nodes any more. On the contrary, each node is able to state autonomously whether to download or not a new software component. Therefore, the software distribution path is not computed *a priori* any more, but each node plays an active part in dynamically tracing such a distribution path, according to the traffic condition of the network, or according to possible faults of the network as well.

Besides, as each node may act as a source node for the adjacent nodes, during the software distribution the available source nodes may increase. Therefore, the nodes have at their disposal an increasing number of source nodes, thus reducing the overall distribution time of the network.

In a first aspect, the present invention provides a method of distributing a first software component to a number of nodes of a telecommunication network, wherein: a first node is identified among said number of nodes; said first node is provided with said first software component; said first node provides to a second adjacent node information on the availability of said first software component at said first node; said second adjacent node, according to the information received from said first node, determines whether to download said first software component from said first node; a third node is provided, which is adjacent to said second node; said second node provides to said third node information on the availability of said first software component at said first node and/or at said second node; and said third node, according to the information received from said second node, determines whether to download said first software component from said second node or from said first node.

When a second software component is distributed to said third node of the network, the step of distributing said second software component comprises: said second software component is provided to said first node; said first node provides to a second adjacent node information on the availability of said second software component at said first node; said second adjacent node, according to the information received from said first node, determines whether to download said second software component from said first node; said second node provides to said third node information on the availability of said second software component at said first node and/or at said second node; and said third node, according to the information received from said second node, determines whether to download said second software component from said second node or from said first node.

In one embodiment, a fourth node, adjacent to said third node, is provided with said first software component, said second and fourth nodes provide information on the availability of said first software component at said second and fourth nodes, respectively, and said third node, according to the information received from said second and fourth nodes, determines whether to download said first software component from said second node or from said fourth node.

According to one embodiment, said third node determines whether to download said first software component from said second node or from said fourth node according to criteria minimizing a cost for downloading said first software component. As an alternative, said third node determines whether to download said first software component from said second node or from said fourth node according to criteria minimizing a time for downloading said first software component.

Preferably, the step of providing said first software component or said second software component to said first node is performed by a Network Operation Center (NOC), and said Network Operation Center is notified about the software component downloads in the nodes of the network.

Preferably, said first node is a gateway node and it is connected to said Network Operation Center.

According to one embodiment, the method further comprises a step of partitioning said network into a number of network partitions, each of said network partitions comprising a gateway node.

The information on the software component availability may include: the name of said software component, the name of a node where said software component is available, information about software release, information about software compatibility and information about cost and time for downloading said software component.

The method may optionally comprise a step, performed in a node, of verifying compatibility of said first software component with any other software component already installed in said node.

According to a second aspect, the present invention provides a telecommunication network node for performing a method as set forth above. The node comprises a software component list, means for updating such a software component list and means for forwarding such a software component list to at least an adjacent node and means for, upon request from said at least one adjacent node, providing such an adjacent node with one or more software components.

Profitably, the node further comprises means for receiving a software component list from an adjacent node and means for requesting a software component to said adjacent node or to a non-adjacent node.

Preferably, said means for requesting a software component comprise means for comparing the software component list received from an adjacent node with its software component list.

In addition, the node further comprises means for notifying a network operation centre the receipt of a software component.

According to a third aspect, the present invention provides a telecommunication network comprising a plurality of nodes as set forth above.

Further features and advantages of the present invention will become clear by the following description, provided as a non limiting example, to be read with reference to the accompanying drawings, wherein:

- Figure 1 schematically shows a first known method of software distribution to the nodes of a telecommunication network;
- Figure 2 schematically shows a second known method of software distribution to the nodes of a telecommunication network;
- Figures 3a and 3b show the structure of a known node and the structure of a node according to the invention, respectively, from the functional point of view;
- Figures 4a and 4b show two succeeding steps of the method of software distribution to the nodes of a telecommunication network according to the present invention, in a portion of a telecommunication network;
- Figures 5a, 5b and 5c show three different embodiments of software distribution according to the present invention, in a ring network;
- Figures 6a and 6b show two different embodiments of software distribution according to the present invention, in a mesh network; and
- Figures 7a and 7b show two different embodiments of software distribution according to the present invention, in a multi-ring network.

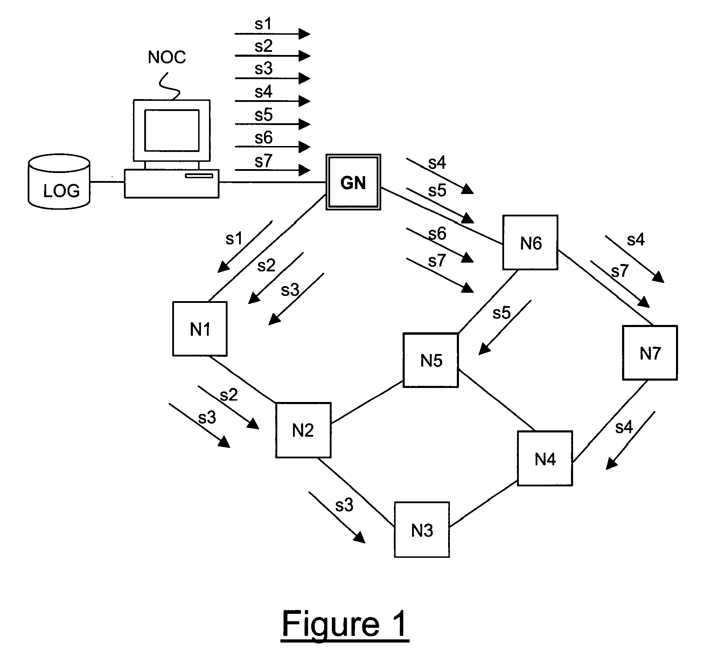

Figure 1 shows a first known method of software distribution in a telecommunication network. A Network Operation Center (or NOC) generates, for each new software component to be distributed, a number of copies s1, s2 ... s7 which is equal to the number of target nodes N1, N2, ... N7. Then, the NOC sends at the same time, on a dedicated channel, all the generated copies to a gateway node GN. The gateway node, in turn, through a multicast protocol forwards each copy s1, s2 ... s7 to a respective target node N1, N2, ... N7.

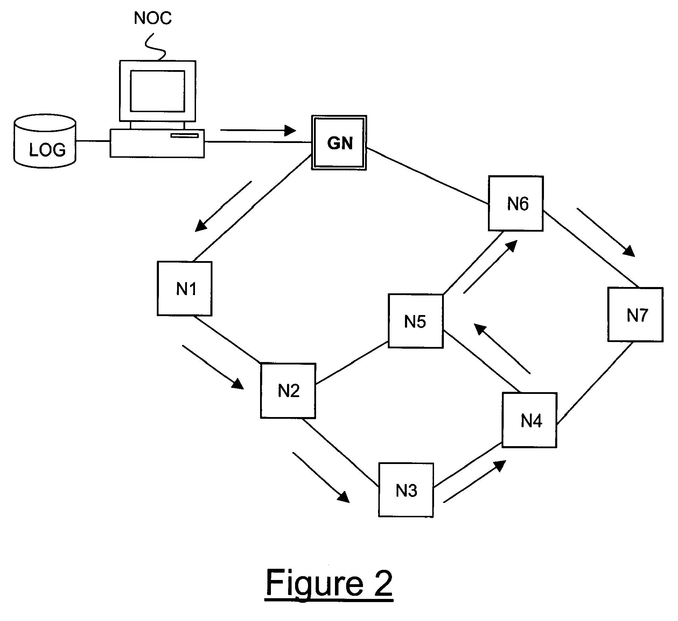

Figure 2 shows a second known method of software distribution in a telecommunication network (as substantially described in WO 2004/059434), wherein, instead of generating a number of copies of a software component which is equal to the number of target nodes, the NOC generates a single copy of the new software component to be distributed, and sends it to a gateway node GN. Through a handshake protocol, all the intermediate target nodes N1, N2, ... N7 requiring the new software component are detected, and a distribution route is traced touching all the detected target nodes. Such a distribution route is shown in Figure 2 through arrows. Each target node N1, N2, ... N7, once received the new software component, is able to duplicate it through an on-the-fly mechanism, and to forward the locally generated copy to the next target node in the distribution route.

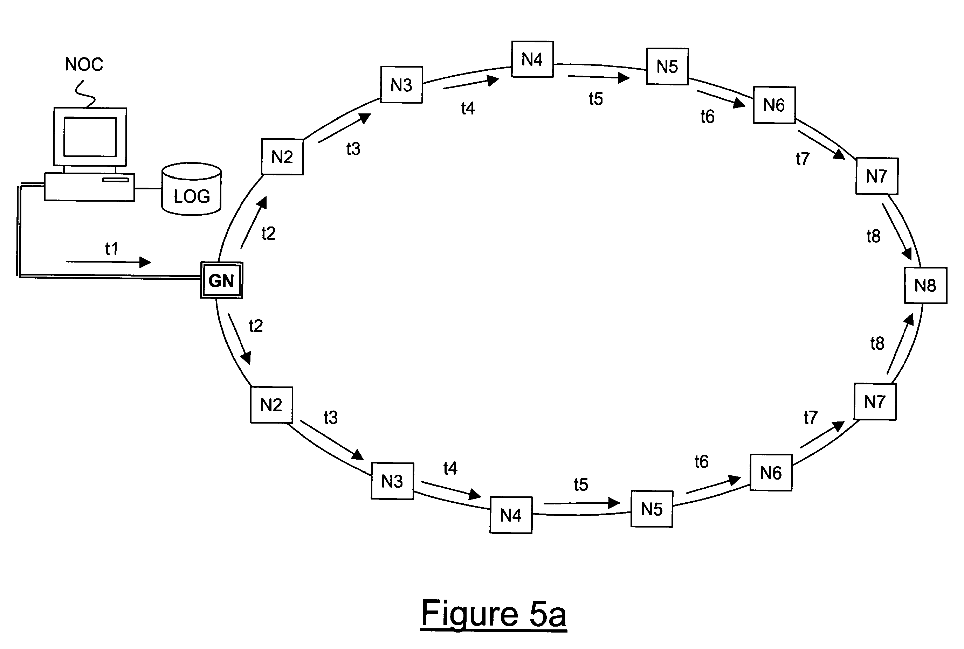

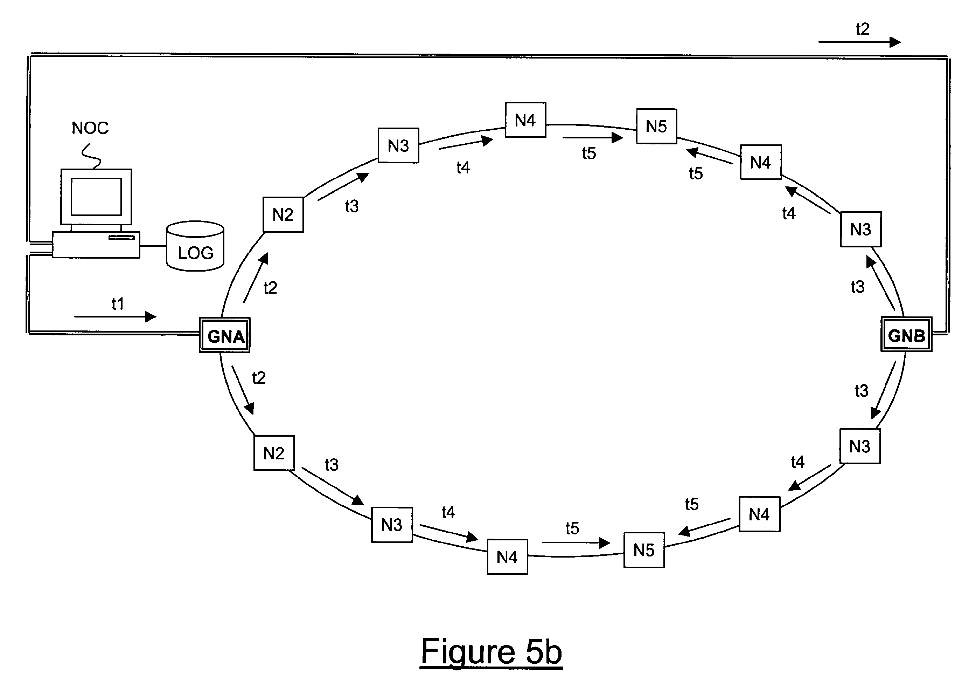

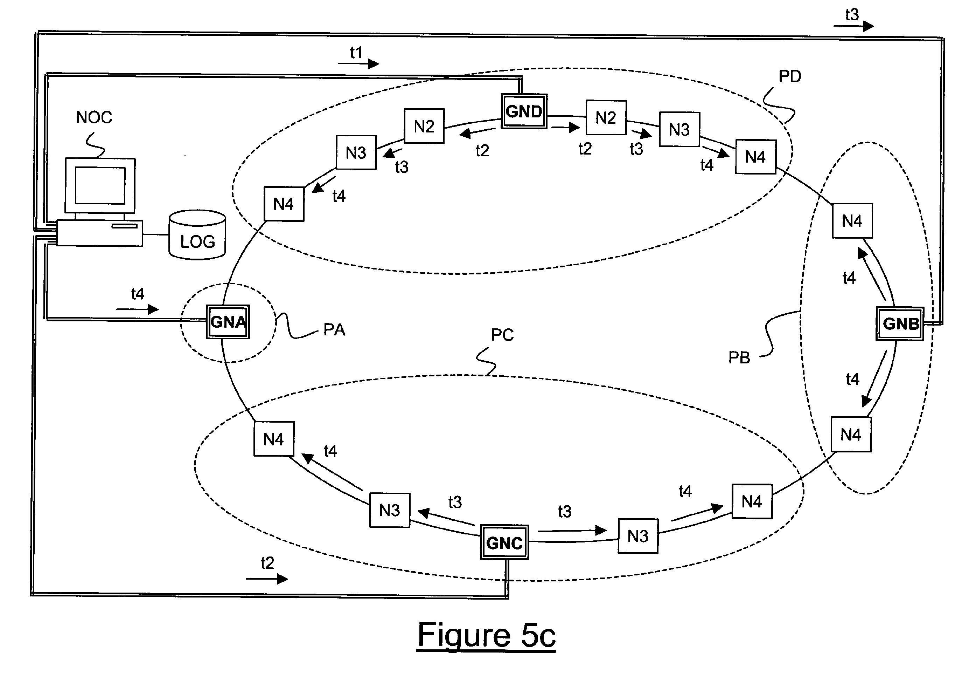

As mentioned above, the method of software distribution according to the present invention provides a first step wherein the NOC selects one or more gateway nodes, and sends to these gateway nodes a new software component to be distributed. The NOC may select the gateway node(s) according to different criterion. Generally, the NOC may select a single gateway node for the entire network, or the NOC may select more than one gateway node for a network. Figures 5a, 5b and 5c show different solutions in a ring network.

Figure 5a shows a first embodiment of the method according to the invention, wherein the NOC selects a single gateway node GN for the whole network. It should be noticed that the NOC can be linked to the gateway node or nodes either through a dedicated control network, or through a path comprising node-to-node links of the network. In Figures 5a, 5b, 5c, 6a, 6b, 7a, 7b, the links between the NOC and the gateway nodes have exclusively a logical meaning, and the physical implementation of these links can be according any of the two solutions described above.

Figure 5b shows a second embodiment of the method according to the invention, wherein the NOC selects two gateway nodes GNA, GNB. It can be noticed that, in a ring network, the two gateway nodes GNA, GNB are advantageously arranged in diametrically opposed positions, as shown in Figure 5b.

Figure 5c shows a third embodiment of the method according to the invention, wherein the NOC performs a partitioning of a ring network, and for each of the resulting partitions PA, PB, PC, PD the NOC selects a respective gateway node GNA, GNB, GNC, GND. In each partition, the software distribution starts from a respective gateway node, and all the nodes belonging to a partition download the new software components only from source nodes belonging to the same partition, as it will be described in detail herein after. The optimum number of partitions and the optimum diameter of each partition (i.e. the maximum distance, expressed in nodes, between two nodes belonging to the same partition) are estimated in order to minimise the overall distribution time, as it will be described in detail herein after.

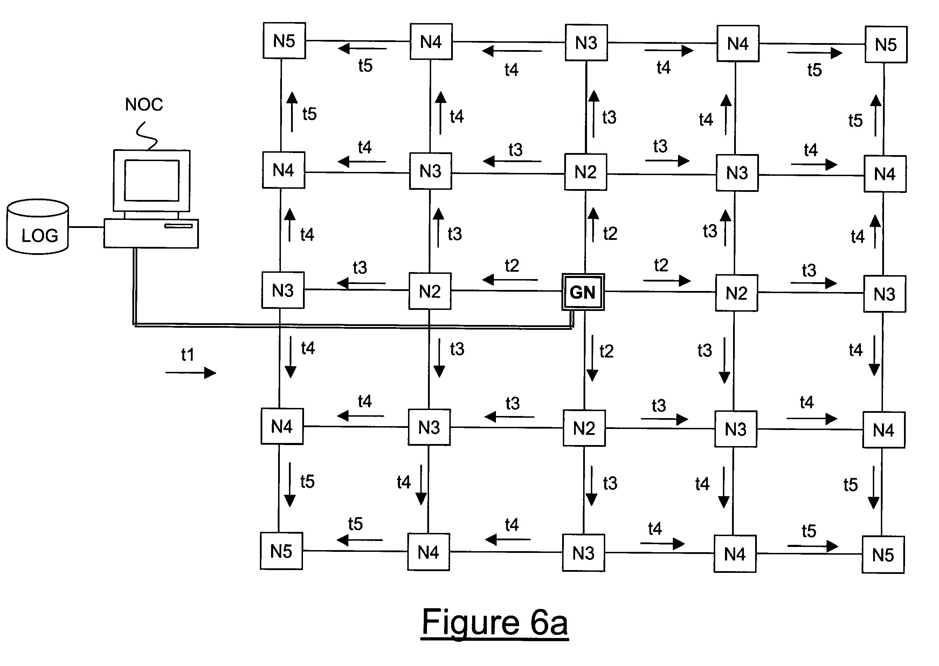

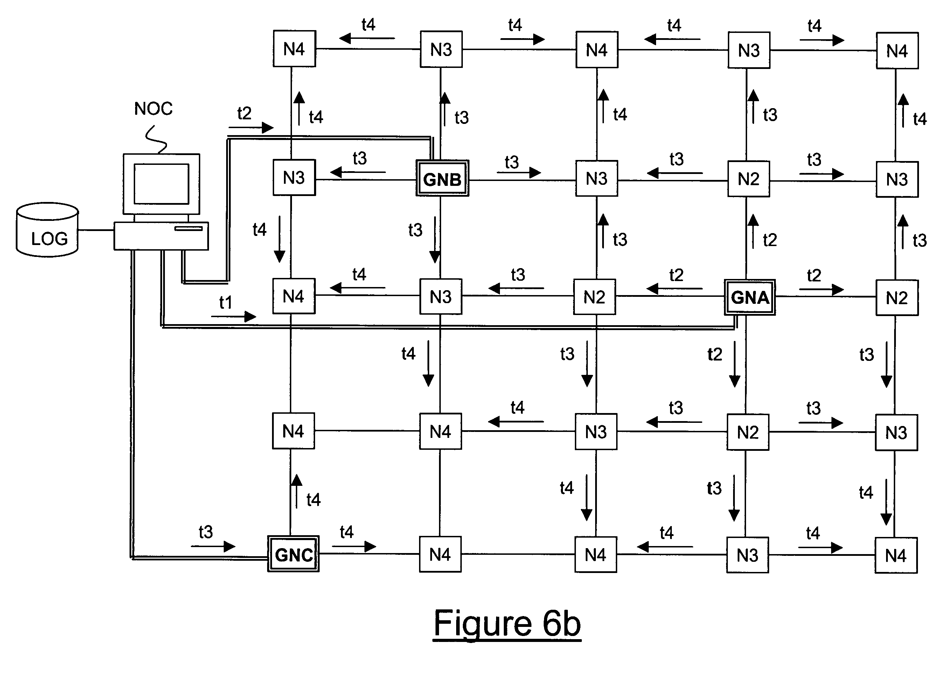

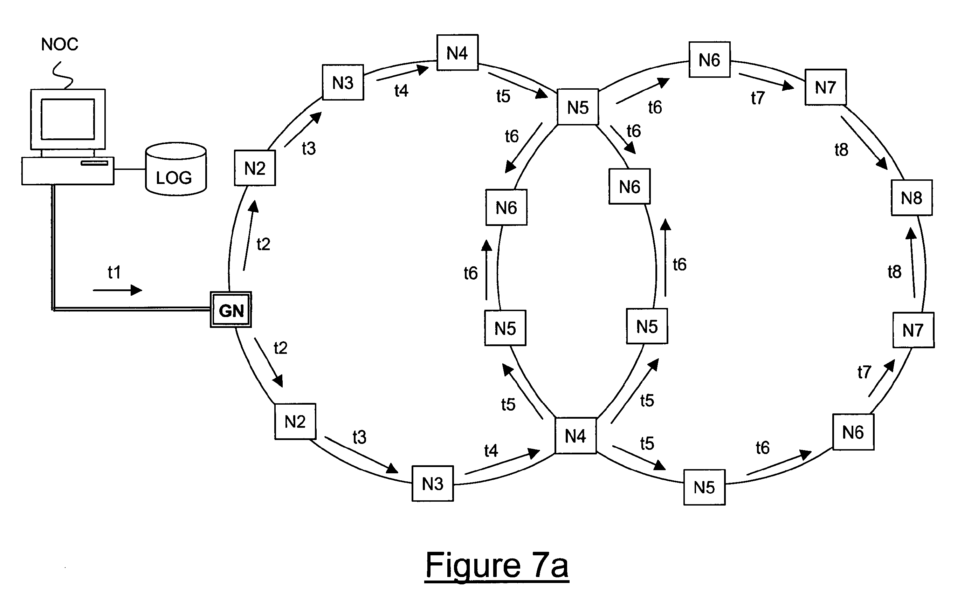

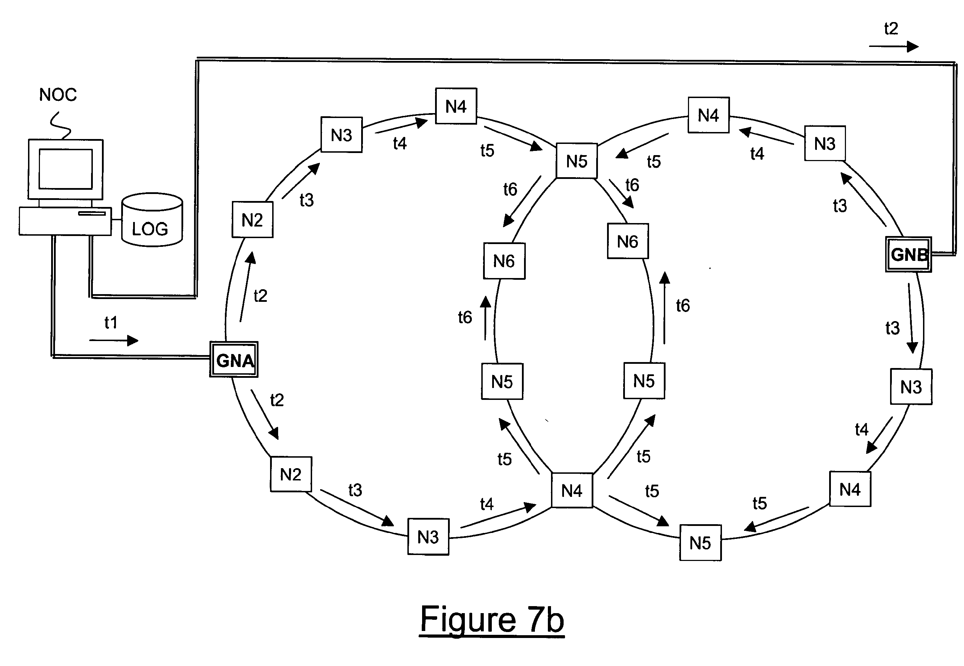

Again, Figure 6a and 6b show embodiments of the method according to the invention, in a mesh network. In particular, in the mesh network of Figure 6a and 6b the NOC selects a single gateway node GN (Figure 6a) and three gateway nodes GNA, GNB, GNC (Figure 6b). Similarly, Figure 7a and 7b show embodiments of the method according to the invention, in a multi-ring network. In particular, in the multi-ring network of Figure 7a and 7b the NOC selects a single gateway node GN (Figure 7a) and two gateway nodes GNA, GNB (Figure 7b).

The choice of the number of gateway nodes and of their position mainly depends on the network topology (ring, mesh, bus), on the extension of the network (i.e. on the overall number of nodes comprised into the network) and on the type of nodes.

As mentioned above, in the method according to the present invention each node plays an active part in the software distribution mechanism. According to the invention, indeed, it is provided a step wherein a node receives information from the adjacent nodes regarding the availability of a new software component. Further, according to the invention it is provided a step wherein the node determines whether to download the new software component and, in affirmative case, which are the source nodes from which the new software component will be downloaded. Therefore, the network nodes, according to the present invention, perform additional functions with respect to a traditional node.

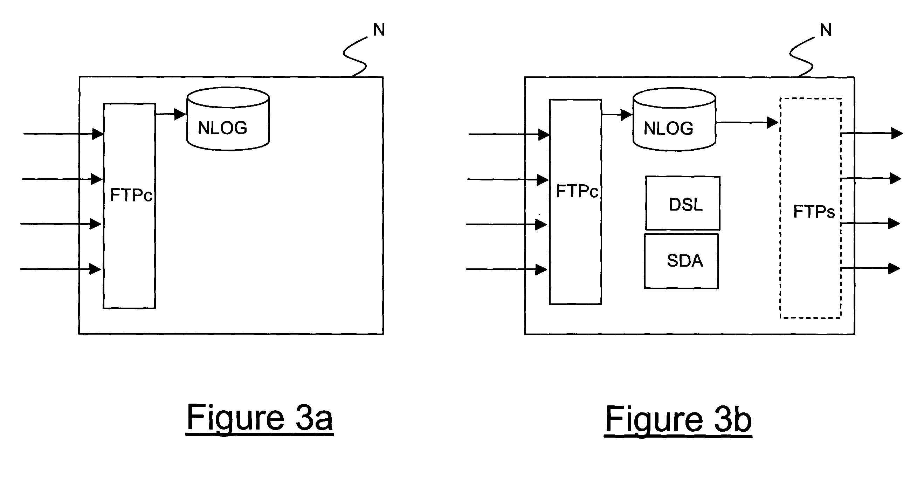

Figure 3a and 3b show a known network node and a network node according to the invention, respectively. A known node N, shown in Figure 3a, comprises a memory NLOG containing all the software components installed in the node N, and an FTP client FTPc, through which the node N downloads new software components from a source node (not shown in Figure 3a).

Figure 3b shows a network node according to the invention. In addition to the memory NLOG and the FTP client FTPc, the node N comprises:

- a Dynamic Software List DSL,
- a Software Download Agent SDA, and
- an FTP server FTPs.

In the method according to the present invention, each node compiles a DSL list, i.e. a list of all the software components stored into its memory NLOG, or available on other nodes. If the network is partitioned, the DSL list of a node belonging to a partition includes only the software components which are already available into the nodes of the same partition. For each software component, the DSL contains at least part of the following information:

1. a component name, univocally identifying the software component inside the entire network;
2. the source node from which the software component can be downloaded;
3. the memory address wherein the software component is located;
4. a list of the node type for which the software component is intended;
5. the release of the software component;
6. the compatibility of the software component with previous releases of the same software component;
7. the cost of the download operation (e.g.: available bandwidth, payload, number of hops etc); and
8. estimation of the time for downloading the software component.

Besides, each node has a SDA agent, which is a software application performing different operations for downloading the new software component.

The node N may optionally include an FTP server, whose role will be explained in detail herein after.

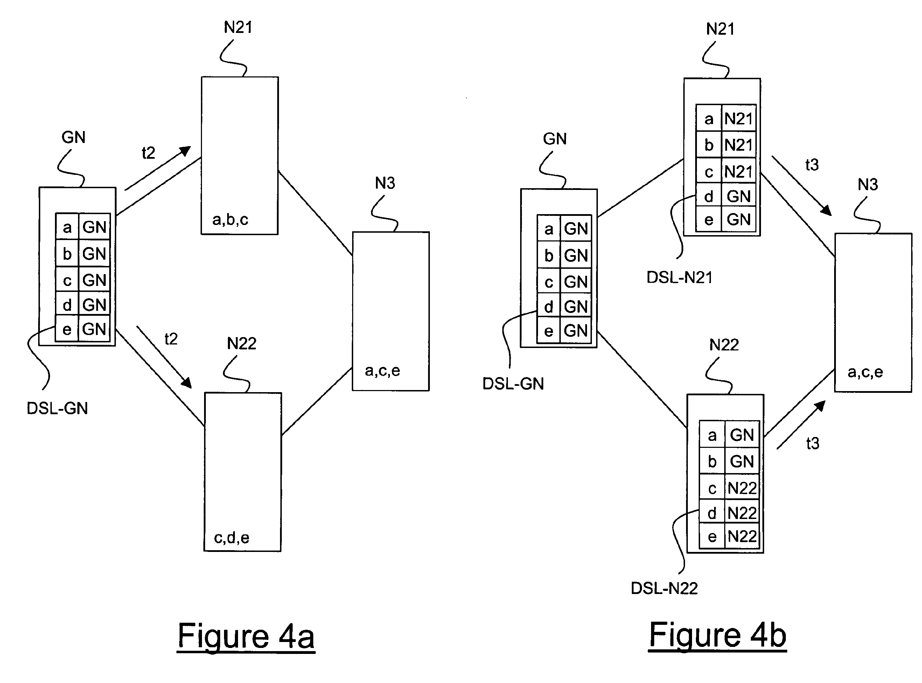

The method of software distribution according to the present invention, and in particular the operation of the SDA agent and the use of the DSL list, will be now explained in detail, referring to Figures 4a and 4b.

Figures 4a and 4b show two succeeding steps of the method of software distribution according to the present invention, in a portion of a telecommunication network. Such a portion comprises a gateway node GN and three nodes N21, N22, N3, which are connected one to each other in a ring topology.

It is assumed that at the time t1 (not shown in Figure 4a and 4b), the gateway node GN receives from the NOC (not shown) five new software components "a", "b", "c", "d" ed "e" to be distributed. After receiving these components, the GN updates its list DSL-GN. Figure 4a shows a portion of the list DSL-GN comprising only the five new software components. For each software component, Figure 4a only shows the component name field (information 1 in the above list) and the source node field (information 2). In this case, the source node is GN for all the five new components. At the time t2, the GN forwards its updated list DSL-GN to its adjacent nodes, i.e. the nodes N21, N22.

It is assumed that the node N21 only needs the components "a", "b" and "c", while the node N22 needs the components c", "d" and "e".

The SDA agent of the node N21 compares the received list DSL-GN with its own list (not shown in Figure 4a). The agent SDA of the node N21 detects, by comparing the two lists, the presence of the five new software components. It is assumed that the software components "d", "e" are not addressed to nodes of the type of N21. Therefore, the SDA agent of the node N21, after a previous check on the compatibility of the new components with the components already installed at the node N21, selects the software components "a", "b" and "c", allocates a portion of the dedicated channel, sends a request to the FTP server of the gateway node GN and downloads the software components "a", "b" and "c" from the FTP server of the gateway node GN.

Once installed the new components, the SDA agent of the node N21 notifies to the NOC the reception of the components (not shown in Figure 4a and 4b). Then, the SDA agent of the node N21 updates its list DSL-N21. Figure 4b shows a portion of the updated list DSL-N21. For each software component, Figure 4b only shows the component name field and the source node field. Therefore, for the software components "a", "b" and "c", the new source node reported into the list DSL-N21 is the node N21. On the contrary, the source node for the components "d" and "e" is still the gateway node GN, since the node N21 has not downloaded such components, and then it is not able to act as a source node for these components. At a time t3, the SDA agent of the node N21 forwards its updated list DSL-N21 to the node N3.

As for the node N21, the node N22 receives at the time t2 the updated list DSL-GN from the gateway node GN.

The SDA agent of the node N22 compares the received list DSL-GN with its own list (not shown in Figure 4a). The agent SDA of the node N22 detects, comparing the two lists, the presence of the five new software components. It is assumed that the software components "a", "b" are not addressed to nodes of the type of N22. Therefore, the SDA agent of the node N22, after a previous check on the compatibility of the new components with the components already installed at the node N22, selects the software components "c", "d" and "e", allocates a portion of the dedicated channel, sends a request to the FTP server of the gateway node GN and downloads the software components "c", "d" and "e" from the FTP server of the gateway node GN.

Once installed the new components, the SDA agent of the node N22 notifies to the NOC the reception of the components (not shown in Figure 4a and 4b). Then, the SDA agent of the node N22 updates its list DSL-N22. Figure 4b shows a portion of the updated list DSL-N22. For each software component, Figure 4b only shows the component name field and the source node field. Therefore, for the software components "c", "d" and "e", the new source node reported into the list is the node N22. On the contrary, the source node for the components "a" and "b" is still the gateway node GN, since the node N22 has not downloaded such components, so it is not able to act as a source node for these components. At a time t3, the SDA agent of the node N22 forwards its updated list DSL-N22 to the node N3.

On the basis of the description reported above, at a time t3 the node N3 simultaneously receives the list DSL-N21 from the node N21 and the list DSL-N22 from the node N22.

It is assumed that, for example, the node N3 has to download uniquely the software components "a", "c" and "e". The SDA agent of the node N3 compares the received lists DSL-N21, DSL-N22 with its own list (not shown in Figure 4b). The SDA agent of the node N3 detects, by comparing the lists, the presence of the five new software components. In particular, the SDA agent of the node N3 determines that the node N21 may provide the software components "a" and "c", while the node N22 may provide the software components "c" and "e". Therefore, the SDA agent of the node N3 will download "a" from the FTP server of N21 and "e" from the FTP server of N22, after allocating suitable portions of the dedicated channel.

Regarding the software component "c", both N21 and N22 can provide it to N3. In this case, the SDA agent of the node N3 may read into the lists DSL-N21 and DSL-N22 the information (not shown in Figure 4b) regarding the cost of the download operation or the estimation of the download time for the software component "c". The SDA agent of the node N3 may thus determine the source node from which the component "c" will be downloaded. The choice can be based on different criteria, such as the minimization of the cost of the download operation or the minimization of the download time.

Once received the software components, the SDA agent of the node N3 updates its own DSL list (not shown) and notifies to the NOC the reception of the new components (not shown). The updated DSL list is forwarded to the adjacent nodes, if any (not shown).

Hence, an SDA agent of a node N according to the present invention performs the following functions:

-   it compares the DSL list incoming from the adjacent nodes with the DSL list of its own node;
-   it selects the new software components to be downloaded;
-   if more than one adjacent node is able to act as source node for a new software component, it selects the source node;
-   it verifies the compatibility of the new software component with the ones already installed at the node N;
-   it allocates a bandwidth of a dedicated channel to download the components;
-   it sends to the NOC acknowledgements about the download operations;
-   it updates the DSL list; and
-   it forwards the DSL list to the adjacent nodes, if any.

It can be observed that in the example described above referring to Figures 4a and 4b, two download mechanisms can be found:

-   Single-Source Download: a target node downloads all the new software components from a single source node (e.g. N21 and N22 download all the respective software components exclusively from the gateway node GN);
-   Multi-Source Download: a target node downloads its software components from more than one source node (e.g. N3 downloads its new software components partially from N21 and from N22).

According to the present invention, in a transmission network all the nodes may support Single-Source Download; alternatively, all the nodes may support Multi-Source Download; alternatively, a network may comprise both nodes supporting Single-Source Download and nodes supporting Multi-Source Download.

In the following, different embodiments of the method according to the present invention will be described, applied to networks with different topologies.

For instance, Figures 5a, 5b and 5c show three embodiments of the method according to the invention in a ring network.

In particular, Figure 5a shows a ring network comprising fourteen nodes. The NOC selects a single gateway node GN, from which the software distribution starts. It is assumed that each node is able to act as a source node for the adjacent nodes (i.e. each node is provided with an FTP server). The gateway node GN receives from the NOC new software components at a time t1. As described above with reference to Figures 4a and 4b, the gateway node GN distributes the software components to the adjacent nodes N2 at a time t2. The nodes N2, in turn, are able to act as source nodes for the adjacent nodes, thus distributing the new software components to the nodes N3 at a time t3. The nodes N3, in turn, act as source nodes for the adjacent nodes N4, which download the software component at a time t4, and so on, until the last node N8 is updated at a time t8. It can be observed that all the nodes of the network of Figure 5a can download the components only from a single source node, except the node N8, which can support either Single Source Download or Multi-Source Download. In the first case, N8 downloads all the new components either from the node N7 - East side or from the node N7 - West side, while in the second case the node N8 can download the components partially from the node N7 - East side and partially from the node N7 - West side.

Under the assumption that a single download time from a source node to a target node is constant and equal to T, the overall distribution time for the network of Figure 5a is Ttot=8T. With the centralized known methods described above, the overall distribution time is Ttot(old)=14T. Therefore, thanks to the present invention, the overall distribution time of the network is reduced to about 57% of the overall distribution time required by the known methods.

Figure 5b shows a ring network comprising fourteen nodes. The NOC selects two gateway nodes GNA, GNB, placed in diametrically opposed positions of the ring. Again, it is assumed that each node is able to act as a source node for the adjacent nodes. The gateway node GNA receives new software components at a time t1. At a time t2, while the GNA distributes the new software component to the adjacent nodes N2, the gateway node GNB receives from the NOC the new software components. The software distribution then starts in two opposite positions of the ring, thus allowing to further reduce the overall distribution time with respect to the embodiment described in Figure 5a.

Referring to Figure 5b, it can be seen that the overall distribution time is Ttot=5T. Considering that with the known distribution methods Ttot(old)=14T, the overall distribution time of the network is reduced to about 35% of the overall distribution time required by the known methods.

Figure 5c shows a ring network comprising sixteen nodes. The NOC defines a partitioning of the network. As mentioned above, in each partition, a node can download software only from source nodes belonging to the same partition. The partitioning is defined by the NOC in order to minimise the overall distribution time of the network. If n is the number of partitions and R(n) is the radius of the n-th partition, the overall distribution time is:

$$Ttot=T*[n+max(R(1),\ R(2),\ \dots\ R(n))],$$

where T is a single download time. The minimum of Ttot is obtained when:

$$R(n)=\ \dots\ =R(2)-(n-2)=R(1)-(n-1)=0.$$

For example, in the network of Figure 5c, the minimum of Ttot is obtained by partitioning the network into four partitions PA, PB, PC, PD, comprising one, three, five and seven nodes, respectively.

For each partition, the NOC selects a gateway node GNA, GNB, GNC, GND. Obviously, the optimum position for each gateway node inside its respective partition is the centre of the partition. It is still assumed that each node can act as a source node for the adjacent nodes belonging to the same partition. The gateway node GND is updated at a time t1=T. At a time t2, while the gateway node GND distributes the software components to the adjacent node N2 of the partition PD, the NOC updates the gateway nodes GNC, so the software distribution can start into the partition PC. At a time t3, the gateway node GNB id updated, so the software distribution can start also into the partition PB. At a time t4, the gateway node GNA is updated, and the updating of all the partitions of the network is completed. The overall distribution time of the partitioned network is thus Ttot=4T. Considering that, with the known methods, the overall distribution time is Ttot(old)=16T, the overall distribution time of the network is reduced to 25% of the overall distribution time required by the known methods.

It has to be noticed that, the higher the number of nodes composing a ring network, the better the improvement deriving from the application of this particular embodiment of the method of the invention. For instance, if the number of nodes in a ring network is sixty-four (not shown), by applying a partitioning according to the above reported criterion, an overall distribution time Ttot = 8T is obtained, thus allowing to reduce the overall distribution time to about 12,5% of the overall distribution time according to the known method.

By comparing the embodiment shown in Figure 5b with the embodiment shown in Figure 5c, it can be observed that in both cases the NOC selects multiple gateway nodes, so that the software distribution, in both cases, starts in different positions of the network. However, in Figure 5b no partitioning is created; this means that each node downloads the software components from any adjacent node. On the contrary, in Figure 5c a partitioning is created, so that each node belonging to a partition downloads the software only from nodes belonging to the same partition. Of course the first solution shown in Figure 5b allows more flexibility and more tolerance to faults, as each node does not suffer any constraints when it selects the source node for software downloading.

Figure 6a shows an embodiment of the method according to the invention in a mesh network including twenty-five nodes. The NOC selects a single gateway node GN, which is placed in the centre of the mesh. Each node is able to act as a source node for the adjacent nodes. If, again, a single download time is T, the GN is updated at a time t1, the nodes N2 are updated at a time t2 and so on, until the nodes N5 which are updated at a time t5. Therefore, the overall distribution time is Ttot=5T. According to the known methods, the overall distribution time is Ttot(old) = 25T. Therefore, according to the present invention, the overall distribution time of the network is reduced to about 20% of the overall distribution time required by the known methods.

Figure 6b shows the same mesh network, wherein the NOC selects three gateway nodes GNA, GNB, GNC. In this case, it can be noticed that the overall distribution time according to this embodiment of the invention is Ttot = 4T, i.e. Ttot is about 16% of Ttot(old).

Figures 7a and 7b show two embodiments of the method according to the present invention in a multi-ring network comprising eighteen nodes. With the known methods, the overall distribution time is Ttot(old)=18T. Figure 7a shows a first embodiment wherein the NOC selects a single gateway node GN, which is updated at a time t1. As each node can act as a source node for the adjacent nodes, the software components propagate into the network, updating nodes N2 at a time t2, nodes N3 at a time t3 and so on. The overall distribution time is then Ttot=8T, i.e. Ttot is about 45% of Ttot(old).

Figure 7b shows a second embodiment wherein, in the network similar to the one of Figure 7a, the NOC selects two gateway nodes, so that the software distribution starts from opposite positions into the network. With two gateway nodes, the overall distribution time is reduced to Ttot=6T, which is about 33% of Ttot(old).

## Claims

1.  A method of distributing a first software component to a number of nodes of a telecommunication network, wherein:

    - a first node is identified among said number of nodes;
    - said first node is provided with said first software component;
    - said first node provides to a second adjacent node information on the availability of said first software component at said first node;
    - said second adjacent node, according to the information received from said first node, determines whether to download said first software component from said first node;
    - a third node is provided, which is adjacent to said second node;
    - said second node provides to said third node information on the availability of said first software component at said first node and/or at said second node; and
    - said third node, according to the information received from said second node, determines whether to download said first software component from said second node or from said first node.

2.  The method according to claim 1, wherein a second software component is distributed to said third node of the network, the step of distributing said second software component comprises:

    - said second software component is provided to said first node;
    - said first node provides to a second adjacent node information on the availability of said second software component at said first node;
    - said second adjacent node, according to the information received from said first node, determines whether to download said second software component from said first node;
    - said second node provides to said third node information on the availability of said second software component at said first node and/or at said second node; and
    - said third node, according to the information received from said second node, determines whether to download said second software component from said second node or from said first node.

3.  The method according to claim 1 or 2, wherein a fourth node, adjacent to said third node, is provided with said first software component, said second and fourth nodes provide information on the availability of said first software component at said second and fourth nodes, respectively, and said third node, according to the information received from said second and fourth nodes, determines whether to download said first software component from said second node or from said fourth node.

4. The method according to claim 3, wherein said third node determines whether to download said first software component from said second node or from said fourth node according to criteria minimizing a cost for downloading said first software component.

5. The method according to claim 3, wherein said third node determines whether to download said first software component from said second node or from said fourth node according to criteria minimizing a time for downloading said first software component.

6. The method according to any of the preceding claims, wherein the step of providing said first software component or said second software component to said first node is performed by a Network Operation Center (NOC), and wherein, said Network Operation Center is notified about the software component downloads in the nodes of the network.

7. The method according to claim 6, wherein said first node is a gateway node and it is connected to said Network Operation Center.

8. The method according to claim 7, wherein it further comprises a step of partitioning said network into a number of network partitions, each of said network partitions comprising a gateway node.

9. The method according to any of the preceding claims, wherein said information on the software component availability includes a name of said software component.

10. The method according to any of the preceding claims, wherein said information on the software component availability includes a name of a node where said software component is available.

11. The method according to any of the preceding claims, wherein said information on the software component availability includes information about software release.

12. The method according to any of the preceding claims, wherein said information on the software component availability includes information about software compatibility.

13. The method according to claim 12, wherein it further comprises a step, performed in a node, of verifying compatibility of said first software component with any other software component already installed in said node.

14. The method according to any of the preceding claims, wherein said information on the software component availability includes information about cost for downloading said software component.

15. The method according to any of the preceding claims, wherein said information on the software component availability includes information about time for downloading said software component.

16. A telecommunication network node for performing a method according to any claims 1-15, wherein it comprises a software component list, means for updating such a software component list and means for forwarding such a software component list to at least an adjacent node and means for, upon request from said at least one adjacent node, providing such an adjacent node with one or more software components.

17. A node according to claim 16, wherein it further comprises means for receiving a software component list from an adjacent node and means for requesting a software component to said adjacent node.

18. A node according to claim 16 or 17, wherein it further comprises means for receiving a software component list from an adjacent node and means for requesting a software component to a non-adjacent node.

19. A node according to any of claims 17 or 18, wherein said means for requesting a software component comprise means for comparing the software component list received from an adjacent node with its software component list.

20. A node according to any of claims 16-19, wherein it further comprises means for notifying a network operation centre the receipt of a software component.

21. A telecommunication network comprising a plurality of nodes according to any of claims 16-20.

Figure 1

Figure 2

Figure 3b

Figure 3a

N21

GN

| a | GN |
| b | GN |
| c | GN |
| d | GN |
| e | GN |

t2

a,b,c

N3

a,c,e

t2

N22

c,d,e

DSL-GN

## Figure 4a

N21

| a | N21 |
| b | N21 |
| c | N21 |
| d | GN |
| e | GN |

GN

| a | GN |
| b | GN |
| c | GN |
| d | GN |
| e | GN |

t3

N3

a,c,e

DSL-N21

DSL-GN

N22

| a | GN |
| b | GN |
| c | N22 |
| d | N22 |
| e | N22 |

t3

DSL-N22

## Figure 4b

NOC

LOG

t1

GN

t2

t2

N2

t3

N2

t3

N3

t4

N3

t4

N4

t5

N4

t5

N5

t6

N5

t6

N6

t7

N6

t7

N7

t8

N7

t8

N8

## Figure 5a

Figure 5b

## Figure 5c

Figure 6a

Figure 6b

Figure 7a

Figure 7b

**European Patent Office**

## EUROPEAN SEARCH REPORT

**Application Number**

EP 04 29 2714

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 03/013099 A (E-3 SOLUTIONS LTD; VALJAKKA, LAURI; KARESNIEMI, LIRO; KARESNIEMI, IIRO) 13 February 2003 (2003-02-13) * page 3, paragraph 2 - page 8, paragraph 1; figure 1 * | 1,2,6-8, 10 | G06F9/445 H04L29/06 |
| X | OBRACZKA K ET AL: "A tool for massively replicating Internet archives: design, implementation, and experience" DISTRIBUTED COMPUTING SYSTEMS, 1996., PROCEEDINGS OF THE 16TH INTERNATIONAL CONFERENCE ON HONG KONG 27-30 MAY 1996, LOS ALAMITOS, CA, USA,IEEE COMPUT. SOC, US, 27 May 1996 (1996-05-27), pages 657-664, XP010167640 ISBN: 0-8186-7399-0 * the whole document * | 1,3-5,10 | |
| A | WHITE D: "A UNIFIED ARCHITECTURE FOR AUTOMATIC SOFTWARE UPDATES" PEER-REVIEWED PROCEEDINGS OF THE ISSA 2004 ENABLING TOMORROW CONFERENCE, [Online] July 2004 (2004-07), pages 1-11, XP002323555 SOUTH AFRICA ISBN: 1868545229 Retrieved from the Internet: URL:http://www.infosecsa.co.za/proceedings 2004/024.pdf> [retrieved on 2005-03-31] * page 10, paragraph 1 * | 1-8,10 | TECHNICAL FIELDS SEARCHED (Int.Cl.7) H04L G06F |

~~The present search report has been drawn up for all claims~~

| Place of search | Date of completion of the search | Examiner |
|---|---|---|
| Berlin | 6 April 2005 | Eraso Helguera, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 659 488 A1**

European Patent
Office

Application Number

EP 04 29 2714

---

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-8,10

22

**European Patent**
**Office**

**LACK OF UNITY OF INVENTION**
**SHEET B**

Application Number

EP 04 29 2714

The Search Division considers that the present European patent application does not comply with the requirements of unity of invention and relates to several inventions or groups of inventions, namely:

1. claims: 1-8,10

   A method for distributing a first software component comprising the reception of information on availability of a software component from at least two adjacent nodes.
   ---

2. claim: 9

   A method for distributing a first software component comprising informing about a name of such software component.
   ---

3. claim: 11

   A method for distributing a first software component comprising informing about software release.
   ---

4. claims: 12,13

   A method for distributing a first software component comprising informing about software compatibility.
   ---

5. claim: 14

   A method for distributing a first software component comprising informing about cost for downloading said software component.
   ---

6. claim: 15

   A method for distributing a first software component comprising informing about time for downloading said software component.
   ---

7. claims: 16-21

   A telecommunication network node and a telecommunication network for distributing a software component by means of a software component list.
   ---

## ANNEX TO THE EUROPEAN SEARCH REPORT
## ON EUROPEAN PATENT APPLICATION NO.

EP 04 29 2714

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2005

| Patent document cited in search report | | Publication date | Patent family member(s) | | Publication date |
|---|---|---|---|---|---|
| WO 03013099 | A | 13-02-2003 | CN | 1557085 A | 22-12-2004 |
| | | | EP | 1421759 A1 | 26-05-2004 |
| | | | WO | 03013099 A1 | 13-02-2003 |
| | | | HU | 0401180 A2 | 28-09-2004 |
| | | | US | 2003093491 A1 | 15-05-2003 |

EPO FORM P0459

For more details about this annex : see Official Journal of the European Patent Office, No. 12/82